# EUROPEAN PATENT APPLICATION

(11) **EP 4 772 774 A1**
(43) Date of publication of application: **08.07.2026**
(21) Application number: 24859136.4
(22) Date of filing: 28.06.2024
(51) Int. Cl.: F16J 15/447, F01D 11/02, F02C 7/28, F04B 53/00, F04D 29/10

(54) **LIQUEFIED GAS SEAL SYSTEM**

(30) Priority: 28.08.2023 JP 2023137887
(71) Applicant: KAWASAKI JUKOGYO KABUSHIKI KAISHA, Kobe-shi, Hyogo 650-8670 (JP)
(72) Inventor: NAKAMURA, Noritaka, Hyogo 650-8670 (JP); MIURA, Toshimasa, Hyogo 650-8670 (JP); SAYO, Akihito, Hyogo 650-8670 (JP); UEYAMA, Kenta, Hyogo 650-8670 (JP)
(74) Representative: Arnold & Siedsma
(86) International application number: PCT/JP2024/023546
(87) International publication number: WO 2025/047090

(57) **Abstract**

A liquefied gas sealing system 10 seals a liquefied gas chamber 7 around a shaft 4, which extends from inside the liquefied gas chamber 7 to outside the liquefied gas chamber 7 so as to penetrate the liquefied gas chamber and which rotates. The liquefied gas sealing system 10 includes: a gas-liquid chamber **11,** which communicates with the liquefied gas chamber 7; a gas chamber 12, which communicates with the gas-liquid chamber **11** and is filled with sealing gas; and a labyrinth 13, through which the gas chamber **11** and outside of the liquefied gas chamber 7 communicate with each other. Preferably, the liquefied gas sealing system 10 further includes a buffer chamber 8, which communicates with the gas chamber 12 via the labyrinth 13.

## Description

### Technical Field

The present specification discloses a liquefied gas sealing system.

### Background Art

Patent Literature 1 discloses a turbopump. The turbopump is used for supplying liquefied gas such as liquid hydrogen or liquid oxygen. The turbopump includes: an impeller that pressure-feeds the liquefied gas; a shaft that rotates together with the impeller; and a bearing that supports the shaft. The shaft penetrates a wall of a liquefied gas chamber. In the turbopump, a labyrinth suppresses leakage of the liquefied gas from around the shaft. The turbopump further includes: a slinger positioned between the labyrinth and the bearing; and a depressurization chamber in which the slinger is accommodated. In the turbopump, a bearing chamber and the depressurization chamber are separated by a partition wall, and thereby fluid movement from the depressurization chamber to the bearing chamber is suppressed.

### Citation List

### Patent Literature

PTL 1: Japanese Laid-Open Patent Application Publication No. 2016-41909

### Summary of Invention

### Technical Problem

The turbopump of Patent Literature 1 transmits rotational kinetic energy to the impeller via the shaft. Accordingly, there is a gap around the shaft. In turbomachines such as turbopumps, leakage of liquefied gas is suppressed by seals such as a labyrinth seal disclosed in Patent Literature 1.

It is an intention of the applicant of the present application to provide a liquefied gas sealing system that reduces leakage of liquefied gas.

### Solution to Problem

A liquefied gas sealing system disclosed in the present specification seals a liquefied gas chamber around a shaft that extends from inside the liquefied gas chamber to outside the liquefied gas chamber so as to penetrate the liquefied gas chamber and that rotates. The liquefied gas sealing system includes: a gas-liquid chamber that communicates with the liquefied gas chamber; a gas chamber that communicates with the gas-liquid chamber and is filled with sealing gas; and a labyrinth through which the gas chamber and outside of the liquefied gas chamber communicate with each other.

### Advantageous Effects of Invention

The liquefied gas sealing system can reduce leakage of liquefied gas.

### Brief Description of Drawings

FIG. 1 shows a configuration of a liquefied gas turbine including a liquefied gas sealing system according to one embodiment.
FIG. 2 is a fragmentary sectional view showing the liquefied gas sealing system included in the liquefied gas turbine of FIG. 1.
FIG. 3 shows a configuration of the liquefied gas sealing system included in the liquefied gas turbine of FIG. 1.

### Description of Embodiments

Hereinafter, preferred embodiments are described in detail with reference to the drawings as necessary.

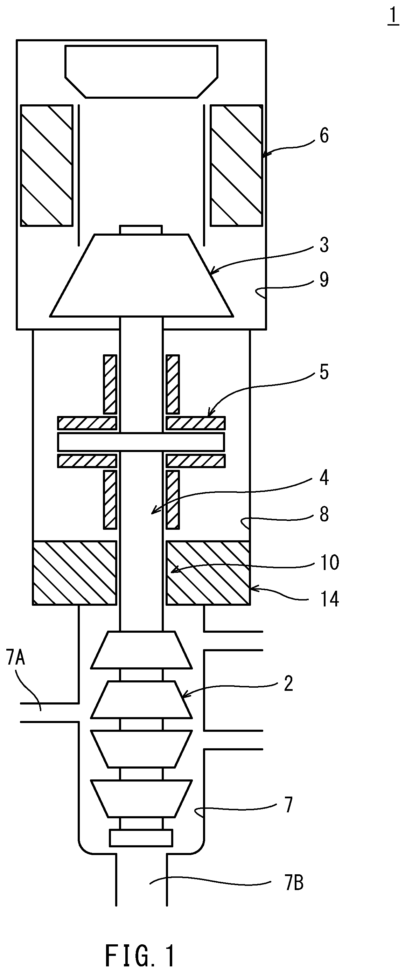

FIG. 1 shows a liquefied gas turbine 1. The liquefied gas turbine 1 is used, for example, in a liquid hydrogen production facility in which liquid hydrogen is obtained. Hereinafter, the liquefied gas turbine 1 is described by taking liquid hydrogen as an example. However, the liquefied gas used in the liquefied gas turbine 1 is not limited to liquid hydrogen.

The liquefied gas turbine 1 includes a turbine 2, a blower 3, a shaft 4, a bearing 5, a heat exchanger 6, a liquefied gas chamber 7, a bearing chamber 8, and a brake chamber 9. The liquefied gas turbine 1 further includes a liquefied gas sealing system 10. In the liquefied gas turbine 1, from the bottom upward, the liquefied gas chamber 7, the bearing chamber 8, and the brake chamber 9 are positioned in this order. The turbine 2 is positioned in the liquefied gas chamber 7. The blower 3 and the heat exchanger 6 are positioned in the brake chamber 9. The bearing 5 is positioned in the bearing chamber 8.

The shaft 4 is supported by the bearing 5 in axial and radial directions. The shaft 4 extends vertically. The shaft 4 is rotatable. As a non-limiting example, a fluid bearing is used as the bearing 5. Although not particularly limited, as a fluid used for the fluid bearing, hydrogen gas fills the bearing chamber 8. The shaft 4 extends from the liquefied gas chamber 7 to the brake chamber 9 via the bearing chamber 8. The shaft 4 couples the turbine 2 and the blower 3. The liquefied gas sealing system 10 is positioned around the shaft 4, which extends from inside the liquefied gas chamber 7 to outside the liquefied gas chamber 7.

In the liquefied gas turbine 1, cryogenic liquid hydrogen at high pressure flows into the liquefied gas chamber 7 through an inlet 7A. The liquid hydrogen rotates the turbine 2. The rotation of the turbine 2 causes energy to be transferred from the liquid hydrogen to the turbine 2, and as a result, the pressure of the liquid hydrogen decreases. The liquid hydrogen whose pressure has decreased flows out through an outlet 7B.

Meanwhile, the rotation of the turbine 2 causes the shaft 4 and the blower 3 to rotate. The brake chamber 9 is filled with a fluid. In the description herein, hydrogen gas is used as the fluid. However, the fluid is not particularly limited to hydrogen gas. The blower 3 causes the hydrogen gas to flow in the brake chamber 9. Thermal energy is taken from the flowing hydrogen gas by the heat exchanger 6. In this manner, the pressure of the liquid hydrogen in the liquefied gas chamber 7 is reduced, and energy is taken from the liquid hydrogen.

The liquefied gas turbine 1 can reduce the pressure of the high-pressure liquid hydrogen while taking energy from the liquid hydrogen. The liquid hydrogen production facility using the liquefied gas turbine 1 can improve energy efficiency.

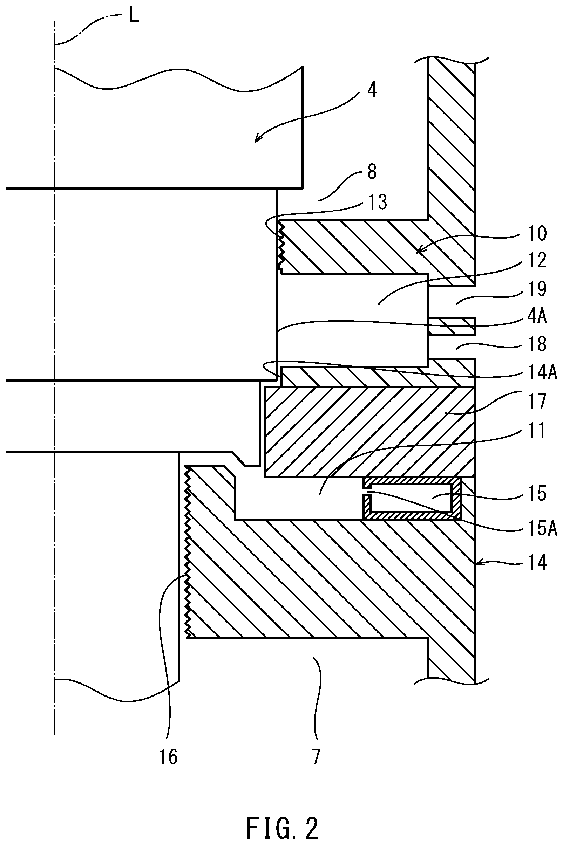

FIG. 2 shows the liquefied gas sealing system 10. FIG. 2 shows a cross section taken along a center line L of the shaft 4. The liquefied gas sealing system 10 includes a gas-liquid chamber 11, a gas chamber 12, and a labyrinth 13. The liquefied gas turbine 1 includes a housing 14. The gas-liquid chamber 11, the gas chamber 12, and the labyrinth 13 are included in the housing 14. The housing 14 may be configured by combining divided components. The liquefied gas sealing system 10 further includes the bearing chamber 8 as a buffer chamber, a damper chamber 15, a labyrinth 16, and a thermal insulator 17.

The gas-liquid chamber 11 is a space recessed from an inner peripheral surface 14A of the housing 14. The gas-liquid chamber 11 is open to an outer peripheral surface 4A of the shaft 4. The gas-liquid chamber 11 surrounds the shaft 4 in the circumferential direction. Between the gas-liquid chamber 11 and the liquefied gas chamber 7, there is a gap between the outer peripheral surface 4A of the shaft 4 and the inner peripheral surface 14A of the housing 14. The gap allows the gas-liquid chamber 11 to communicate with the liquefied gas chamber 7 around the shaft 4. In the liquefied gas turbine 1, the gas-liquid chamber 11 communicates with the liquefied gas chamber 7 via the labyrinth 16.

The gas chamber 12 is a space recessed from the inner peripheral surface 14A of the housing 14. The gas chamber 12 is open to the outer peripheral surface 4A of the shaft 4. The gas chamber 12 surrounds the shaft 4 in the circumferential direction. Between the gas chamber 12 and the gas-liquid chamber 11, there is a gap between the outer peripheral surface 4A of the shaft 4 and the inner peripheral surface 14A of the housing 14. The gap allows the gas chamber 12 to communicate with the gas-liquid chamber 11 around the shaft 4.

The bearing chamber 8 is a space recessed from the inner peripheral surface 14A of the housing 14. The bearing chamber 8 is open to the outer peripheral surface 4A of the shaft 4. The bearing chamber 8 surrounds the shaft 4 in the circumferential direction. Between the bearing chamber 8 and the gas chamber 12, the labyrinth 13 is present between the outer peripheral surface 4A of the shaft 4 and the inner peripheral surface 14A of the housing 14. The bearing chamber 8 communicates with the gas chamber 12 around the shaft 4. The bearing chamber 8 communicates with the gas chamber 12 via the labyrinth 13. The bearing chamber 8 is a buffer chamber into which the hydrogen gas that has leaked from the gas chamber 12 via the labyrinth 13 flows. The bearing chamber 8 is a mere example of the buffer chamber, and the buffer chamber is not limited to the bearing chamber 8. The buffer chamber may be any chamber, so long as it is a space into which the hydrogen gas that has leaked from the gas chamber 12 via the labyrinth 13 flows.

The labyrinth 13 is positioned between the gas chamber 12 and the bearing chamber 8. The labyrinth 13 is a combination of a large number of irregular gaps between the outer peripheral surface 4A of the shaft 4 and the inner peripheral surface 14A of the housing 14. In FIG. 2, the labyrinth 13 includes irregularities on the inner peripheral surface 14A of the housing 14. However, the irregularities of the labyrinth 13 are not limited to those shown in FIG. 2. Alternatively, the irregularities of the labyrinth 13 may be those on the outer peripheral surface 4A of the shaft 4, or may be both irregularities on the outer peripheral surface 4A of the shaft 4 and those on the inner peripheral surface 14A of the housing 14.

In the radial direction of the shaft 4, the damper chamber 15 is positioned on the outer peripheral side of the gas-liquid chamber 11. The damper chamber 15 surrounds the gas-liquid chamber 11 in the circumferential direction of the shaft 4. The damper chamber 15 includes a communication hole 15A. The communication hole 15A is an opening that allows the damper chamber 15 to communicate with the gas-liquid chamber 11. The area of the opening of the communication hole 15A is less than the area of a cross section of the damper chamber 15, the cross section being taken along the circumferential direction and the axial direction of the shaft 4. Alternatively, in the radial direction of the shaft 4, the damper chamber 15 may be positioned on the inner peripheral side of the gas-liquid chamber 11. Further, in the axial direction of the shaft 4, the damper chamber 15 may be located at a position that is different from the position of the gas-liquid chamber 11 in the vertical direction (axial direction).

The labyrinth 16 is positioned between the liquefied gas chamber 7 and the gas-liquid chamber 11. The labyrinth 16 is a combination of a large number of irregular gaps between the outer peripheral surface 4A of the shaft 4 and the inner peripheral surface 14A of the housing 14. In FIG. 2, the labyrinth 16 includes irregularities on the inner peripheral surface 14A of the housing 14. However, the irregularities of the labyrinth 16 are not limited to those shown in FIG. 2. Alternatively, the irregularities of the labyrinth 16 may be those on the outer peripheral surface 4A of the shaft 4, or may be both irregularities on the outer peripheral surface 4A of the shaft 4 and those on the inner peripheral surface 14A of the housing 14.

The thermal insulator 17 is positioned between the gas-liquid chamber 11 and the gas chamber 12. The thermal insulator 17 thermally insulates between the gas-liquid chamber 11 and the gas chamber 12.

The liquefied gas sealing system 10 further includes an inflow passage 18 and a discharge passage 19. Each of the inflow passage 18 and the discharge passage 19 communicates with the gas chamber 12.

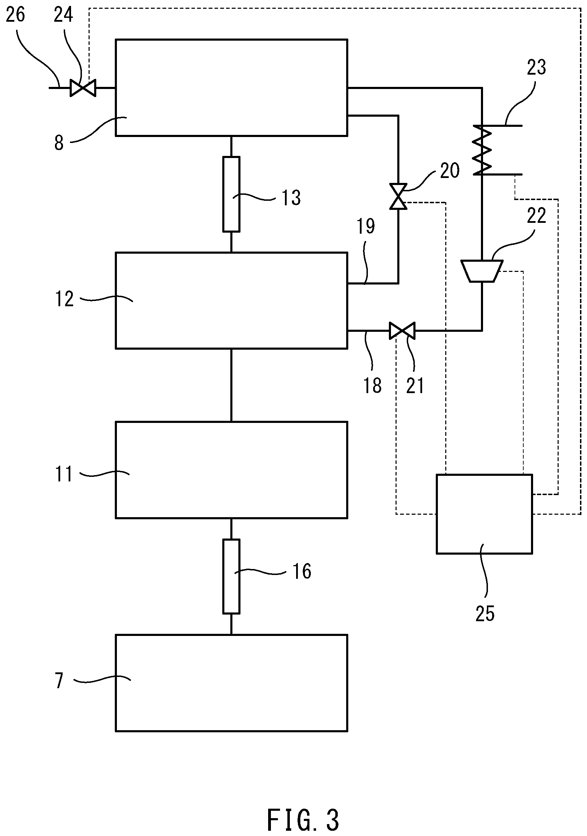

As shown in FIG. 3, each of the inflow passage 18 and the discharge passage 19 communicates with the bearing chamber 8. That is, each of the inflow passage 18 and the discharge passage 19 allows the gas chamber 12 and the bearing chamber 8, which serves as a buffer chamber, to communicate with each other.

The liquefied gas sealing system 10 further includes a control valve 20, a control valve 21, a compressor 22, a heat exchanger 23, an exhaust valve 24, and control circuitry 25. The control valve 20 is positioned on the discharge passage 19. Each of the control valve 21, the compressor 22, and the heat exchanger 23 is positioned on the inflow passage 18. The exhaust valve 24 is positioned on a discharge passage 26, which extends from the bearing chamber 8 serving as a buffer chamber. The control circuitry 25 can control the control valve 20, the control valve 21, the compressor 22, the heat exchanger 23, and the exhaust valve 24.

The control valve 20 can adjust a pressure difference between the hydrogen gas in the gas chamber 12 and the hydrogen gas in the bearing chamber 8. The control valve 21 can adjust the flow rate and pressure of the hydrogen gas that fills the gas chamber 12. The compressor 22 can fill the gas chamber 12 with the hydrogen gas from the bearing chamber 8. The heat exchanger 23 can adjust the temperature of the hydrogen gas. The exhaust valve 24 can adjust the pressure in the bearing chamber 8 and the flow rate of the hydrogen gas discharged from the bearing chamber 8.

In the liquefied gas sealing system 10, the control circuitry 25 controls the control valve 20, the control valve 21, the compressor 22, the heat exchanger 23, and the exhaust valve 24. Accordingly, the control circuitry 25 controls the pressure difference between the gas chamber 12 and the bearing chamber 8. The control circuitry 25 controls the temperature of the hydrogen gas in the gas chamber 12. The control circuitry 25 may control a pressure difference between the bearing chamber 8 and the discharge passage 26.

The liquefied gas sealing system 10 includes: the gas-liquid chamber 11, which communicates with the liquefied gas chamber 7; the gas chamber 12, which communicates with the gas-liquid chamber 11 and is filled with hydrogen gas (sealing gas); and the labyrinth 13, through which the gas chamber 12 and the outside of the liquefied gas chamber 7 communicate with each other.

The hydrogen gas that leaks from the gas chamber 12 flows through the labyrinth 13, and consequently the pressure of the hydrogen gas is gradually reduced. The labyrinth 13 suppresses the amount of leaking hydrogen gas by reducing the pressure of the hydrogen gas. The labyrinth 13 is suitable for suppressing leakage of hydrogen gas in a gas-phase state. On the other hand, the labyrinth 13 is less effective in terms of leakage suppression effect for liquid hydrogen in a liquid-phase state than in terms of leakage suppression effect for hydrogen gas.

In the liquefied gas sealing system 10, the liquid hydrogen flows into the gas chamber 12 via the gas-liquid chamber 11. By passing through the gas-liquid chamber 11, the liquid hydrogen in a liquid-phase state is suppressed from flowing into the gas chamber 12. Further, the gas chamber 12 is filled with the hydrogen gas. The liquid hydrogen that has flowed into the gas chamber 12 is mixed with the hydrogen gas, and as a result, vaporizes. In this manner, the liquid hydrogen in a liquid-phase state is suppressed from reaching the labyrinth 13. This makes it possible for the labyrinth 13 to exert high sealing performance.

Liquid hydrogen with a pressure below the critical point undergoes a change in state between a liquid-phase state and a gas-phase state due to a change in temperature. There are cases where liquid hydrogen with a pressure below the critical point undergoes a change in state from a gas-phase state to a liquid-phase state either within the gas-liquid chamber 11 or while flowing from the gas-liquid chamber 11 before reaching the gas chamber 12. As previously described, in the liquefied gas sealing system 10, the liquid hydrogen in a liquid-phase state is suppressed from reaching the labyrinth 13. This makes it possible for the labyrinth 13 to exert high sealing performance for liquid hydrogen with a pressure below the critical point. The liquefied gas sealing system 10 is suitable for sealing, in particular, liquid hydrogen with a pressure below the critical point.

Further, the specific gravity of liquid hydrogen is greater than the specific gravity of hydrogen gas. In the liquefied gas sealing system 10, the gas chamber 12 is positioned above the gas-liquid chamber 11. Accordingly, the liquid hydrogen in a liquid-phase state is suppressed from flowing into the gas chamber 12 from the gas-liquid chamber 11. Further, the labyrinth 13 is positioned above the gas chamber 12. Accordingly, the liquid hydrogen is suppressed from reaching the labyrinth 13. This makes it possible for the labyrinth 13 to exert high sealing performance.

Since the labyrinth 13 exerts high sealing performance, the length of the labyrinth 13 can be reduced. Such a reduction in the length of the labyrinth 13 can contribute to a reduction in the size of the liquefied gas sealing system 10.

The liquefied gas sealing system 10 further includes the bearing chamber 8 (buffer chamber), which communicates with the gas chamber 12 via the labyrinth 13. Since the liquefied gas sealing system 10 includes the bearing chamber 8 (buffer chamber), by controlling the gas pressure and gas temperature in the bearing chamber 8, the hydrogen gas can be suppressed from leaking from the labyrinth 13 into the bearing chamber 8 (buffer chamber). This makes it possible for the labyrinth 13 to exert higher sealing performance.

The liquefied gas sealing system 10 further includes the control valve 20, which adjusts the pressure difference between the gas chamber 12 and the bearing chamber 8. By adjusting the pressure difference between the gas chamber 12 and the bearing chamber 8, the liquefied gas sealing system 10 can more stably suppress leakage of the liquefied gas.

The liquefied gas sealing system 10 further includes the heat exchanger 23, which adjusts the gas temperature in the gas chamber 12. By adjusting the gas temperature in the gas chamber 12, the liquefied gas sealing system 10 can readily vaporize the liquid hydrogen that has flowed into the gas chamber 12. This makes it possible for the labyrinth 13 to exert higher sealing performance. Further, in the liquefied gas sealing system 10, the amount of hydrogen gas that fills the gas chamber 12 is adjusted by the control valve 21 and the compressor 22. The liquefied gas sealing system 10 thus configured can readily adjust the gas temperature in the gas chamber 12. Accordingly, the liquefied gas sealing system 10 can vaporize the liquid hydrogen that has flowed into the gas chamber 12 without increasing the gas temperature in the gas chamber 12 more than necessary.

The liquefied gas sealing system 10 further includes the damper chamber 15, which communicates with the gas-liquid chamber 11. The damper chamber 15 suppresses a change in pressure in the gas-liquid chamber 11. In the liquefied gas turbine 1, the pressure of the liquid hydrogen in the liquefied gas chamber 7 varies. A variation in the pressure of the liquid hydrogen in the liquefied gas chamber 7 causes a variation in the gas pressure in the gas-liquid chamber 11. The damper chamber 15 suppresses a rapid variation in the pressure in the gas-liquid chamber 11. Accordingly, the pressure in the gas chamber 12, which communicates with the gas-liquid chamber 11, can be readily adjusted.

As shown in FIG. 2, the communication hole 15A of the damper chamber 15 communicates with the gas-liquid chamber 11 at a position above the vertically middle position of the gas-liquid chamber 11. The damper chamber 15 suppresses an inflow of the liquid hydrogen from the gas-liquid chamber 11. Alternatively, the communication hole 15A may communicate with the gas-liquid chamber 11 at a position below the vertically middle position of the gas-liquid chamber 11.

Although the damper chamber 15 communicates with the gas-liquid chamber 11, the damper chamber 15 may communicate with the gas chamber 12. The damper chamber 15 may suppress a rapid variation in the pressure in the gas chamber 12. The damper chamber 15 may be positioned within the gas chamber 12 or near the gas chamber 12.

The liquefied gas sealing system 10 further includes the labyrinth 16, through which the liquefied gas chamber 7 and the gas-liquid chamber 11 communicate with each other. The labyrinth 16 suppresses leakage of the liquid hydrogen from the liquefied gas chamber 7 into the gas-liquid chamber 11. The labyrinth 16 also suppresses a variation in the pressure in the gas-liquid chamber 11 due to a variation in the pressure of the liquid hydrogen in the liquefied gas chamber 7. Accordingly, the pressure in the gas chamber 12, which communicates with the gas-liquid chamber 11, can be readily adjusted.

The liquefied gas sealing system 10 includes the thermal insulator 17. The thermal insulator 17 is positioned between the gas-liquid chamber 11 and the gas chamber 12. Since the thermal insulator 17 reduces input of heat from the gas chamber 12 into the gas-liquid chamber 11, evaporation of the liquid hydrogen in the gas-liquid chamber 11 can be suppressed, and leakage of the liquefied gas can be reduced. The thermal insulator 17 suppresses heat transfer from the gas chamber 12 to the liquefied gas chamber 7. Accordingly, the temperature in the gas chamber 12 can be readily adjusted. The thermal insulator 17 can be positioned between the gas-liquid chamber 11 and the liquefied gas chamber 7.

The liquefied gas turbine 1 includes: the turbine 2, which rotates inside the liquefied gas chamber 7; the blower 3, which rotates outside the liquefied gas chamber 7; the shaft 4, which couples the turbine 2 and the blower 3 and rotates; and the liquefied gas sealing system 10, which seals the liquefied gas chamber 7 around the shaft 4. In the liquefied gas turbine 1, the pressure of the high-pressure liquid hydrogen can be reduced while taking energy from the liquid hydrogen with the turbine 2, the blower 3, and the shaft 4. The liquefied gas turbine 1 can contribute to improvement in energy efficiency.

The liquefied gas sealing system 10 includes the gas-liquid chamber 11, the gas chamber 12, and the labyrinth 13. Accordingly, as described above, the liquefied gas sealing system 10 can suppress leakage of the liquid hydrogen from the liquefied gas chamber 7.

A liquid hydrogen production apparatus in which the liquefied gas turbine 1 is used handles cryogenic liquid hydrogen. The cryogenic liquid hydrogen is obtained through a large number of processes. Accordingly, suppressing leakage of the cryogenic liquid hydrogen has a significant impact on the operating cost and economic efficiency of the liquid hydrogen production apparatus. The liquefied gas turbine 1 can improve the operating cost and economic efficiency of the liquid hydrogen production apparatus.

The liquefied gas sealing system 10 is used in the liquefied gas turbine 1. However, this is a non-limiting example. For example, the liquefied gas sealing system 10 may be used in a power generation facility in which an impeller that rotates inside a liquefied gas chamber is coupled to a power generator outside the liquefied gas chamber.

In the description herein, explanation has been given by taking, as an example, the liquefied gas turbine 1, which obtains energy from liquid hydrogen. However, the application of the liquefied gas sealing system 10 is not limited to its use in the liquefied gas turbine 1. The liquefied gas sealing system 10 may be used in a pump that increases the pressure of liquid hydrogen. The liquefied gas sealing system 10 can be widely used in turbomachines that include the shaft 4, which converts the energy of a fluid into mechanical kinetic energy and convers mechanical kinetic energy into the energy of a fluid.

### [Disclosure Items]

Each of the following aspects discloses a preferred embodiment.

### [Aspect 1]

A liquefied gas sealing system for sealing a liquefied gas chamber around a shaft that extends from inside the liquefied gas chamber to outside the liquefied gas chamber so as to penetrate the liquefied gas chamber and that rotates, the liquefied gas sealing system including: a gas-liquid chamber that communicates with the liquefied gas chamber; a gas chamber that communicates with the gas-liquid chamber and is filled with sealing gas; and a labyrinth through which the gas chamber and outside of the liquefied gas chamber communicate with each other.

According to the above configuration, liquefied gas reaches the labyrinth through the gas-liquid chamber and the gas chamber. The liquefied gas in a liquid-phase state is suppressed from reaching the labyrinth. This makes it possible for the labyrinth to exert high sealing performance. The liquefied gas sealing system can reduce leakage of the liquefied gas.

### [Aspect 2]

The liquefied gas sealing system according to aspect 1, further including a buffer chamber that communicates with the gas chamber via the labyrinth.

According to the above configuration, the gas pressure and gas temperature in the buffer chamber, into which the gas that leaks from the labyrinth flows, can be readily adjusted. This makes it possible for the labyrinth to exert higher sealing performance.

### [Aspect 3]

The liquefied gas sealing system according to aspect 2, further including a control valve that adjusts a pressure difference between the gas chamber and the buffer chamber.

According to the above configuration, by adjusting the pressure difference between the gas chamber and the buffer chamber, the liquefied gas sealing system can more stably suppress leakage of the liquefied gas.

### [Aspect 4]

The liquefied gas sealing system according to any one of aspects 1 to 3, further including a heat exchanger that adjusts a gas temperature in the gas chamber.

According to the above configuration, by vaporizing the liquid hydrogen in the gas chamber, the labyrinth can exert higher sealing performance.

### [Aspect 5]

The liquefied gas sealing system according to any one of aspects 1 to 4, further including a damper chamber that communicates with one or both of the gas-liquid chamber and the gas chamber.

According to the above configuration, the damper chamber suppresses a rapid variation in pressure. Accordingly, the pressure in the gas chamber can be readily adjusted.

### [Aspect 6]

The liquefied gas sealing system according to any one of aspects 1 to 5, wherein the labyrinth is a first labyrinth, the liquefied gas sealing system further including a second labyrinth through which the liquefied gas chamber and the gas-liquid chamber communicate with each other.

According to the above configuration, the second labyrinth suppresses a rapid variation in pressure. Accordingly, the pressure in the gas chamber can be readily adjusted.

### [Aspect 7]

The liquefied gas sealing system according to any one of aspects 1 to 6, wherein in a vertical direction, the gas chamber is positioned above the gas-liquid chamber, and the labyrinth is positioned above the gas chamber.

According to the above configuration, the liquefied gas is suppressed from reaching the labyrinth. This makes it possible for the labyrinth to exert high sealing performance.

### [Aspect 8]

The liquefied gas sealing system according to any one of aspects 1 to 7, further including a thermal insulator that thermally insulates between the gas-liquid chamber and the gas chamber.

According to the above configuration, the thermal insulator suppresses heat transfer from the gas chamber to the liquefied gas chamber or to the gas-liquid chamber. Accordingly, the temperature in the gas chamber can be readily adjusted.

### [Aspect 9]

A turbomachine including: a first impeller that rotates inside a liquefied gas chamber; a second impeller that rotates outside the liquefied gas chamber; a shaft that couples the first impeller and the second impeller and rotates; and a liquefied gas sealing system that seals the liquefied gas chamber around the shaft, wherein the liquefied gas sealing system includes: a gas-liquid chamber that communicates with the liquefied gas chamber; a gas chamber that communicates with the gas-liquid chamber and is filled with sealing gas; and a labyrinth through which the gas chamber and outside of the liquefied gas chamber communicate with each other.

According to the above configuration, with the liquefied gas sealing system, the turbomachine can suppress leakage of liquefied gas from the liquefied gas chamber. The turbomachine thus configured can improve the operating cost and economic efficiency of a liquefied gas production apparatus.

### Industrial Applicability

The above-described liquefied gas sealing system is widely applicable as a sealing system that suppresses leakage of liquefied gas.

## Claims

1. A liquefied gas sealing system for sealing a liquefied gas chamber around a shaft that extends from inside the liquefied gas chamber to outside the liquefied gas chamber so as to penetrate the liquefied gas chamber and that rotates, the liquefied gas sealing system comprising:
a gas-liquid chamber that communicates with the liquefied gas chamber;
a gas chamber that communicates with the gas-liquid chamber and is filled with sealing gas; and
a labyrinth through which the gas chamber and outside of the liquefied gas chamber communicate with each other.

2. The liquefied gas sealing system according to claim 1, further comprising a buffer chamber that communicates with the gas chamber via the labyrinth.

3. The liquefied gas sealing system according to claim 2, further comprising a control valve that adjusts a pressure difference between the gas chamber and the buffer chamber.

4. The liquefied gas sealing system according to claim 2 or 3, further comprising a heat exchanger that adjusts a gas temperature in the gas chamber.

5. The liquefied gas sealing system according to claim 1 or 2, further comprising a damper chamber that communicates with one or both of the gas-liquid chamber and the gas chamber.

6. The liquefied gas sealing system according to claim 1 or 2, wherein
the labyrinth is a first labyrinth,
the liquefied gas sealing system further comprising a second labyrinth through which the liquefied gas chamber and the gas-liquid chamber communicate with each other.

7. The liquefied gas sealing system according to claim 1 or 2, wherein
in a vertical direction, the gas chamber is positioned above the gas-liquid chamber, and the labyrinth is positioned above the gas chamber.

8. The liquefied gas sealing system according to claim 1 or 2, further comprising a thermal insulator that thermally insulates between the gas-liquid chamber and the gas chamber.

9. A turbomachine comprising:
a first impeller that rotates inside a liquefied gas chamber;
a second impeller that rotates outside the liquefied gas chamber;
a shaft that couples the first impeller and the second impeller and rotates; and
a liquefied gas sealing system that seals the liquefied gas chamber around the shaft,
wherein
the liquefied gas sealing system includes:
a gas-liquid chamber that communicates with the liquefied gas chamber;
a gas chamber that communicates with the gas-liquid chamber and is filled with sealing gas; and
a labyrinth through which the gas chamber and outside of the liquefied gas chamber communicate with each other.
